**Europäisches Patentamt**

**European Patent Office**

**Office européen des brevets**

(11) Veröffentlichungsnummer: **0 121 586**
**A1**

(12) # EUROPÄISCHE PATENTANMELDUNG

(21) Anmeldenummer: **83106153.6**

(22) Anmeldetag: **23.06.83**

(51) Int. Cl.³: **A 01 C 7/08**

(43) Veröffentlichungstag der Anmeldung: **17.10.84**
Patentblatt **84/42**

(84) Benannte Vertragsstaaten: **AT BE CH DE FR GB IT LI LU NL SE**

(71) Anmelder: **Kirchberger, Franz, Lichtenfelser Strasse 43, D-8623 Staffelstein (DE)**

(72) Erfinder: **Kirchberger, Franz, Lichtenfelser Strasse 43, D-8623 Staffelstein (DE)**

(74) Vertreter: **LOUIS, PÖHLAU, LOHRENTZ & SEGETH, Kesslerplatz 1, D-8500 Nürnberg (DE)**

(54) **Sämaschine.**

(57) Es wird eine laufradlose Sämaschine vorgeschlagen, bei der die Schare (12) mit konstantem Druck auf dem Boden aufliegen und relativ zum Saatgutbehälter (10) beweglich sind. Diese Sämaschine wird in auskragender Weise an der Zugmaschine befestigt.

## Sämaschine

Die Erfindung betrifft eine Sämaschine mit einem an einem Grundrahmen befestigten Saatgutvorratsbehälter und relativ zum Saatgutvorratsbehälter anhebbaren und absenkbaren und im wesentlichen mit konstantem Druck in den Boden greifenden Scharen, wobei der Grundrahmen mit dem Rahmen eines Fahrzeuges verbindbar ist.

Sämaschinen, bei denen für den im wesentlichen konstanten Druck der Schare mit Hilfe von Federeinrichtungen oder Kolbenzylindereinheiten in Verbindung mit einem genügend grossen Speicher gesorgt wird, sind bekannt (sh. beispielsweise P 32 17 428.4-23   ). Diese Sämaschinen, wie auch alle anderen Sämaschinen, weisen alle ein oder mehrere Laufräder auf, die unmittelbar am Grundrahmen befestigt sind. Aufgrund dieser Abstützung über die Laufräder wird der Grundrahmen der Sämaschine in einem festen Abstand vom Boden gehalten, was bislang angestrebt wurde, um einen konstanten Abstand zwischen Saatgutvorratsbehälter und den Scharen zu erhalten. Ein Anheben und Absenken der Schare war

0121586

nur erforderlich, um die Eindringtiefe der Schare in den Boden verstellen zu können, oder bei etwa konstantem Druck der Schare auf den Boden Anpassungen an wechselnde Bodenhärten zu ermöglichen. Zu ergänzen ist noch, dass das am Grundrahmen befestigte Laufrad oftmals auch noch für den Antrieb einer Dosiereinrichtung der Sämaschine herangezogen wird.

Die Laufräder der bekannten Sämaschinen begrenzen die Arbeitsgeschwindigkeit, also die Fahrgeschwindigkeit der Sämaschine beim Säen, weil das Rad bei unebenem Boden anfängt, unruhig zu laufen und zu springen, wenn die Fahrgeschwindigkeit gesteigert wird. Dabei ist zu berücksichtigen, dass das Gewicht der von einem Fahrzeug, in der Regel einem Traktor, hinterhergezogenen Sämaschine vergleichsweise gering ist und die Laufräder relativ klein sind. Ferner neigen die Laufräder bei schwierigen Einsatzverhältnissen, wie z.B. nassen und schweren Böden, zum Blockieren. Aber auch bei weniger schweren Einsatzbedingungen wird mit einem Schlupf der Laufräder zu rechnen sein. Abgesehen von den damit verbundenen Beanspruchungen der Maschine haben diese Wirkungen auch noch zur Folge, dass eine über die Laufräder erfolgende Kontrolle der Dosiereinrichtungen sowie ein über die Laufräder erfolgender Antrieb der Dosiereinrichtungen nicht mehr genau arbeiten, so dass eine gleichmässige Verteilung des Saatgutes über der landwirtschaftlichen Nutzfläche nicht mit der gewünschten Genauigkeit sichergestellt werden kann.

Der Erfindung liegt nun die Aufgabe zugrunde, die bei den bekannten Sämaschinen in Verbindung mit den Laufrädern der Sämaschinen auftretenden Nachteile auszuschalten.

Diese Aufgabe wird erfindungsgemäss bei der eingangs als bekannt vorausgesetzten Sämaschine dadurch gelöst, dass an dem Grundrahmen der Sämaschine eine mit dem Boden in Kontakt stehende Abstützung fehlt und dass der Grund rahmen der Sämaschine mit dem Fahrzeugrahmen in aus- kragender Weise befestigbar ist.

Der Verzicht auf eine Abstützung der Sämaschine selbst am zu bearbeitenden Boden, insbesondere durch eine Laufeinrichtung, wie z.B. Laufräder oder Kufen, beseitigt naturgemäss alle mit der Laufeinrichtung im Zusammenhand stehenden Probleme. An Stelle der Abstützung der Sämaschine über Laufräder am Boden wird nunmehr der Grundrahmen der Sämaschine mit dem Rahmen des Zugfahrzeuges in auskragender Weise befestigt, wobei Relativbewegungen in der Höhe zwischen Zugfahrzeug und Sämaschine praktisch ausgeschaltet sind. Das hat natürlich zur Folge, dass jetzt sich der Abstand des vom Fahrzeugrahmen entfernt liegenden Endes des Grundrahmens, an dem die Scharen vorgesehen sind, zum zu bearbeitenden Boden ändert aufgrund der bei unebenem Boden auftretenden Nickbewegungen. Diese zum Teil beträchtlichen Abstandsänderungen sind aber unschädlich, wenn die Schare mit konstantem Druck gegen den Boden gedrückt werden und relativ zum Grundrahmen bzw. zum Saatgutvorratsbehälter beweglich sind, z.B. indem sie über einen flexiblen Schlauch mit dem Saatgutbehälter verbunden sind oder indem sie über teleskopartige Saatgutrohre in Verbindung mit dem Saatgutbehälter stehen. Auf diese Weise wird sichergestellt, dass unabhängig vom Bodenabstand die Schare in der gewünschten Weise in den Boden dringen.

Die Dosiereinrichtung der Sämaschine kann hydraulisch arbeiten, so dass aus diesem Grunde Laufräder nicht notwendig sind. Elektrohydraulische Antriebe sind beispielsweise in der EP-PS 82 10 86 95 beschrieben. Die Dosiereinrichtung kann auch von der Zapfwelle der Zugmaschine angetrieben werden. Es ist aber auch möglich, ein über

- 4-

0121586

eine Kette antriebsmässig mit der Sämaschine verbundenes und hinter der Sämaschine hergezogenes Antriebsrad zu verwenden, das gleichzeitig als Impulsgeber für die verschiedenen Werte für eine Regelung der pro Flächeneinheit aufzubringenden Saatgutmenge dienen kann. Diese Werte können aber auch auf andere Weise, beispielsweise durch kontaktfreies Abtasten der Bodenoberfläche oder durch Messungen an den Laufrädern der Zugmaschine erhalten werden.

Abgesehen von der Vermeidung der obenerwähnten Nachteile hat die Erfindung auch noch den Vorteil, dass Bauteile eingespart werden und ein Wechsel vom Solobetrieb zu einer Kombination von zwei Maschinen, beispielsweise Sämaschine und Kreiselegge zusammen, leichter wird. Aufgrund des fehlenden Abstützrades lässt sich die erfindungsgemässe Sämaschine in jedem Falle leichter an tragenden Bodenbearbeitungsgeräten anbringen als die bekannten Sämaschinen. Das gilt auch dann, wenn ein Laufrad beispielsweise für Messzwecke hinterhergezogen wird, da die Position dieses Laufrades relativ zur Sämaschine beliebig gewählt werden kann.

Die Befestigung einer Zugmaschine oder eines tragenden Bodenbearbeitungsgerätes kann in bekannter Weise erfolgen, so wie dies auch bei anderen Bodenbearbeitungsgeräten, wie z.B. Pflügen, gemacht wird.

Um sicherzustellen, dass nicht nur Nickbewegungen der in austragender Weise an der Zugmaschine oder einem anderen Bodenbearbeitungsgerät befestigten Sämaschine in Fahrtrichtung, sondern auch quer zur Fahrtrichtung ausgeglichen werden, ist es ferner zweckmässig, wenn die Säschare quer zur Fahrtrichtung zu mehreren aufeinanderfolgenden Gruppen zusammengefasst sind, die von je einer die Säschare mit konstantem Druck nach unten beaufschlagende Druckeinrichtung beaufschlagt werden, wobei alle Druckeinrichtungen den gleichen Druck ausüben.

Die Erfindung wird nun an Ausführungsbeispielen und an Hand der beiliegenden Zeichnung näher erläutert.Es zeigen:

Fig. 1 eine schematische Seitenansicht einer Sämaschine ohne Traktor, aber mit einem Laufrad, die als bekannt vorausgesetzt wird,

Fig. 2 ein Schaltbild des elektrischen und hydraulischen Teils eines Steuersystems für die Sämaschine der Fig. 1,

Fig. 3 die erfindungsgemässe Sämaschine ohne Laufrad,

Fig. 4 ein für die erfindungsgemässe Sämaschine abgewandeltes Schaltbild,

Fig. 5 eine erfindungsgemässe Sämaschine mit einem Nachlaufrad,

Fig. 6 eine erfindungsgemässe Sämaschine, die an einem tragenden Bodenbearbeitungsgerät befestigt ist, und

Fig. 7 schematisch eine Draufsicht auf eine erfindungsgemässe Sämaschine.

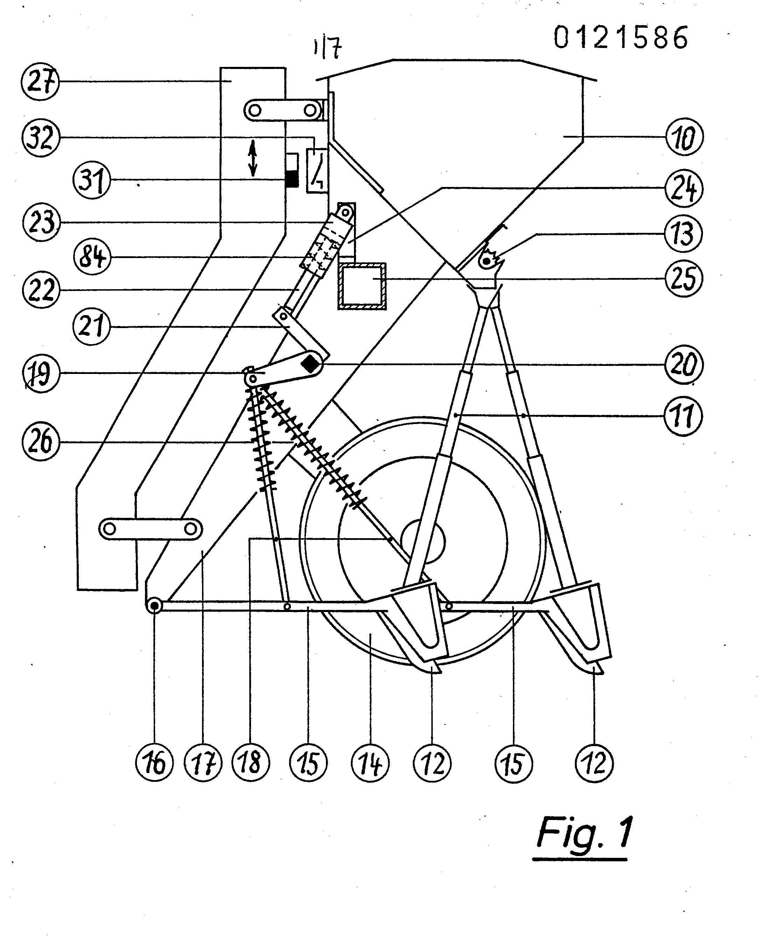

In der in Fig. 1 schematisch gezeigten Sämaschine ist mit 10 ein von oben beschickbarer Saatkasten mit V-förmiger Querschnittsform bezeichnet. Vom Boden dieses Saatkastens 10 erstrecken sich zahlreiche Saatrohre 11 nach unten, die in Schare 12 münden. Zwischen den Auslassöffnungen im Boden des Saatkastens 10 und den oberen Enden der Saatrohre 11 sind auf einer Welle im seitlichen Abstand nebeneinander die Saatgut-Dosierräder 13 befestigt. Der Wellenantrieb erfolgt über einen nciht gezeigten Antriebszug durch eines der Laufräder 14 der Sämaschine. Die Schare 12 sind am einen Ende von Schararmen 15 befestigt, die jeweils mit ihrem anderen Ende auf einer Achse 16 auf- und abschwenkbar gelagert sind. Die Achse 16 erstreckt sich zwischen den unteren Enden von Maschinenrahmenteilen 17, an denen oben auch der Saatkasten 10 befestigt ist. Um den Bewegunten der Schare 12 um die Achse 16 folgen zu können, sind die Saatrohre 11 teleskopierbar.

An jedem Schararm 15 ist eine Betätigungsstange 18 angelenkt. Die oberen Enden dieser Betätigungsstangen 18 sind mit jeweils einem Hebel 19 gelenkig verbunden, die ihrerseits drehfest auf einerWelle 20 befestigt sind. Die Welle 20 ist in den Maschinenrahmenteilen 17 drehbewegliche gelagert. An dieser Welle 20 ist ferner mit einem Ende ein Hebel 21 drehfest angeordnet, an dessen anderen Ende eine Kolbenstange 22 eines Schar-Hubzylinders 23 gelenkig befestigt ist. Der Schar-Hubzylinder 23 ist seinerseits schwenkbar zwischen zwei Lagerteilen 24 angeordnet, die an einem Holm 25 befestigt sind, der sich zwischen den Maschinenrahmenteilen 17 erstreckt. Zwischen jeder Betätigungsstange 18 für einen Schararm 15 und einem Hebel 19 ist eine Schardruckfeder 26 zur Einzelabfederung der Schare 12 eingespannt. Zu diesem Zweck sind die Betätigungsstangen 18 mit einem gewissen axialen Spiel an den Hebeln 19 angelenkt. Aus Vorstehendem geht hervor, dass bei Betätigung des Schar-Hubzylinders 23 die Schare 12 über den Hebel 21, die Welle 20,die Hebel 19 und Betätigungsstangen 18 im Uhrzeigersinn um die Achse 16 geschwenkt werden können, wobei die Schare 12 in Arbeitsposition ausfahren und für die Säarbeit gegen den Boden vorgespannt werden.

Die in Fig. 1 schematisch gezeigte Sämaschine ist zum Anbau an die hydraulische Aushebevorrichtung eines Traktors (nicht gezeigt) bestimmt. Die Sämaschine weist zu diesem Zweck ein mit den Maschinenrahmenteilen 17 in einem begrenzten Ausmass beweglich verbundenen Vorrahmen 27 auf, an den der Oberlenker sowie die beiden Unterlenker der traktorseitigen Aushebevorrichtung angeschlossen werden. Die Relativbewegung des Vorrahmens 27 beim Aushebevorgang gegenüber dem Hauptrahmen der Sämaschine wird durch nicht gezeigte Anschläge begrenzt,so dass nach Beendigung einer vehältnismässig kurzen anfänglichen Relativbewegung dann die gesamte Sämaschine angehoben wird.

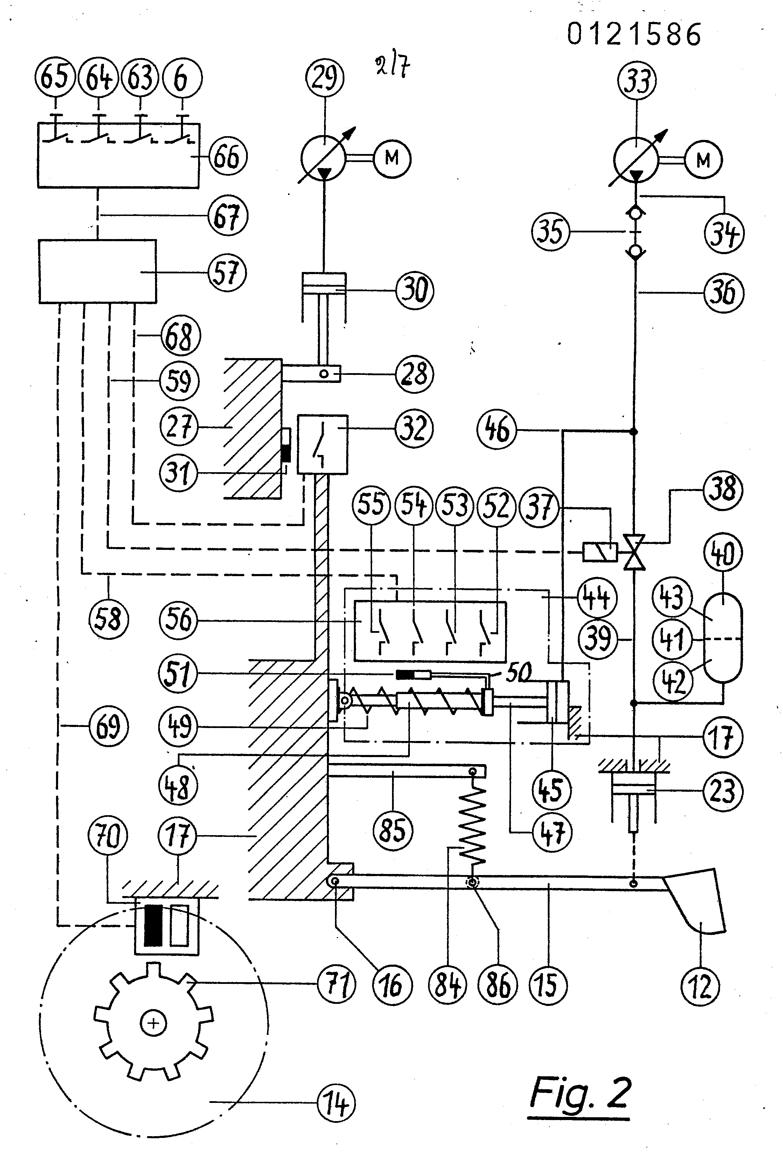

Im foglenden wird unter Bezugnahmeauf Fig. 2 das kombinierte elektrische und hydraulische Steuersystem für die vorstehend erläuterte Sämaschien beschrieben.

Mit 29 ist in Fig. 2 schematisch ein Grundsteuergerät für einen Hydraulik-Zylinder 30 der Aushebevorrichtung des Traktors bezeichnet, dessen Kolbenstange an einem Arm 28 angreift, welcher mit dem oben erwähnten Vorrahmen 27 der Drillmaschine starr verbunden ist, der in Fig. 2 lediglich schematisch, gleich dem Maschinenrahmenteil 17 angedeutet ist. Mit 32 ist ein elektrischer Schalter gekennzeichnet, z.B. in Form eines Reed-Schalters, der durch ein am Vorrahmen 27 befestigtes Betätitigungselement 31 in Form eines Permanentmagneten geschaltet wird, wenn der Vorrahmen 27 die oben erwähnte Relativbewegung beim Ausheben der Sämaschine durch den Traktor ausführt. Die Funktion des elektrischen Schalters 32 wird noch beschrieben.

Ein am Traktor angeordnetes Zusatz-Steuergerät 33 für den Schar-Hubzylinder 23 ist über eine Hydraulik-Leitung 34 und eine Rohrkupplung 35 mit der drillmaschinenseitigen Hydraulikleitung 36 verbunden, die zum Eingang eines durch einen Elektromagneten 37 betätigbaren Sperrventils 38 geführt ist. Der Ausgang des Sperrventils 38 ist über eien Hydraulik-Leitung 39 mit dem Schar-Hubzylinder 23 verbunden. An der Hydraulik-Leitung 39 ist eine hydropneumatische Feder 40 angeschlossen, die während der Säarbeit die vertikalen Bewegungen der Schare 12 bei Bodenunebenheiten dämpft und den Druck der Hydraulikflüssigkeit im Steuersystem stabilisiert. Die hydropneumatische Feder 40 besteht aus einem Druckbehälter, dessen Innenraum durch eine elastische Trennwand 41 in einen Hydraulikabschnitt 42 und einen Gasdruckabschnitt 43 unterteilt ist.

Mit 44 ist in Fig. 2 ein auf unterschiedliche Druckwerte in der Hydraulikleitung 36 ansprechender elektrischer Signalgeber bezeichnet. Dieser Signalgeber 44 weist einen Hydraulik-Zylinder 45 auf, der über eine Hydraulikleitung 46 vor dem Eingang des Sperrventils 38 an die Hydraulikleitung 36 angeschlossen ist. Die Kolbenstange 47 des Hydraulik-Zylinders 45 wirkt gegen einen Stossdämpfer 48, und eine am Stossdämpfer 48 angreifende Schraubendruckfeder 49 drückt die Kolbenstange 47 bei druckfreiem Hydraulik-Zylinder 45 nach rechts in die Ausgangsstellung. Die Kolbenstange 47 trägt einen Arm 50 mit einem Permanent-Magneten 51, der als Betätigungselement für eine Reihe von elektrischen Schaltern 52-55 in Form von Reed-Schaltern dient. Diese Reed-Schalter sind in einem gemeinsamen Gehäuse 56 des Signalgebers 44 in einer linearen Reihe angeordnet, so dass sie von dem Permanentmagneten 51 nacheinander betätigt werden können,wenn dieser sich am Schaltergehäuse 56 entlang bewegt.

Die elektrischenSchalter 52 - 55 sind über diskrete elektrische Leitungen, in Fig. 2 vereinfacht durch eine gestrichelte Linie 58 angedeutet, mit einer bei 57 schematsich als Block gezeigten logischen Schaltung verbunden. Jedem elektrischen Schalter 53, 54 und 55 ist ein von Hand betätigbarer elektrischer Schalter 63, 64 und 65 in einem Schaltergehäuse 66 zugeordnet, die gleichfalls über getrennte elektrische Leiter, in Fig. 2 vereinfacht durch die eine gestrichelte Linie 67 angedeutet, mit der logischen Schaltung 57 verbunden sind. Schliesslich ist von der logischen Schaltung 57 ein elektrischer Leiter 59 zum Elektromagneten 37 geführt, der das Sperrventil 38 betätigt.

Jeder der elektrischen Schalter 53, 54 und 55 im Signalgeber 44 ist jeweils einem bestimmten Druckwert in der Hydraulikleitung 36 zugeordnet und damit auch einer bestimmten Schar-Vorspannung durch den Schar-Hubzylinder 23 bei geöffnetem Sperrventil 38. Dabei repräsentiert der elektrische Schalter 53 den kleinsten und der elektrische Shalter 55 den grössten Druckwert. Es sei bemerkt, dass für eine feinere Abstufung der Druckwerte und damit der Schar-Vorspannung entsprechend mehr elektrische Schalter im Signalgeber 44 und auch im Schaltergehäuse 66 vorgesehen sein können. Ausserdem kann der geometrische Abstand zwischen den Schaltern 53 - 55 verändert und damit die Druckwertbreite variiert werden. Die elektrischen Schalter 63, 64 und 65 in Fig. 2 stellen Vorwählschalter

0121586

dar, mittels welcher manuell unterschiedliche Schar-Vorspannungen in die logische Schaltung 57 eingegeben werden können.

Der an einem Maschinenrahmenteil 17 befestigte elektrische Schalter 32 ist gleichfalls über eine elektrische Leitung 68 mit der logischen Schaltung 57 verbunden und eine weitere elektrische Leitung 69 verbindet einen drehrichtungsabhängigen, z.B. auf induktiver Basis arbeitenden elektrischen Schalter 70 mit der logischen Schaltung 57. Der drehrichtungsabhängig arbeitende elektrische Schalter 70 ist an einem Maschinenrahmenteil 17 starr angeordnet und wird durch ein Zahnprofilrad 71 betätigt, welches mit einem Laufrad 14 der Sämaschine antriebsmässig gekuppelt sit. Die Funktionen des elektrischen Schalters 32 und des drehrichtungsabhängig arbeitenden elektrischen Schalters 70 werden noch beschrieben.

Während in Fig. 1 die Rückholfeder 84 zwischen dem Kolben und dem einen Ende des Schar-Hubzylinders 23 eingespannt dargestellt ist, ist die gleiche Rückholfeder in Fig. 2 schematisch zwischen einer am Maschinenrahmenteil 17 befestigten Halterung 85 und einer Stange 86 eingespannt gezeigt, die sämtliche Schararme 15 miteinander verbindet. Wenn der Schar-Hubzylinder 23 drucklos ist, schiebt die Rückholfeder 84 die Kolbenstange 22 gemäss Fig. 1 nach oben, wodurch die Hebel 21 und 19 im Uhrzeigersinn gedreht und die Betätigungsstangen 18 gemeinsam mit den Schararmen 15 angehoben werden. In Fig. 2 erfüllt die Rückholfeder 84 die gleiche Funktion, jedoch greift sie bei drucklosem Schar-Hubzylinder 23 an der Stange 86 an, um die Schararme 15 anzuheben.

Es wird nun angenommen, dass zur Ausführung von Säarbeiten die Sämaschine, die sich noch im angehobenen Zustand befindet, durch die Aushebevorrichtung des Traktors mit ihren Laufrädern 14 auf dem Boden abgesetzt werden soll. Zu diesem Zweck wird das Grundsteuergerät 29 entsprechend ebetätigt, so dass der Hydraulik-Zylinder 30 den Vorrahmen 27 und schliesslich den Maschinen-Hauptrahmen der Sämaschine absenkt, bis die Laufräder 14 den Boden berühren. Der elektrische Schalter 32 wird in dieser Arbeitsphase durch den Permanent-Magneten 31 nicht geöffnet. Es ist noch darauf hinzuweisen, dass während dieser Arbeitsphase die Schare 12 durch die Rückholfeder 84 angehoben sind, so dass in jedem Fall beim Absetzen der Sämaschine zuerst deren Laufräder 14 Bodenkontakt bekommen. Um die Säarbeit aufnehmen zu können, müssendie Säschare 12 entgegen der Kraft der Rückholfeder 84 in Richtung Boden vorgespannt werden. Der Grad dieser Vorspannung der Schare 12 ergibt eine bestimmte Eintauchtiefe und wird durch manuelle Betätigung eines der elektrischenSchalter 63, 64 oder 65 bestimmt, die jeweils einer bestimmten Vorspannkraft der Säschare 12 zugeordnet sind. Desweiteren wird das traktorseitige Zusatz-Steuergerät 33 betätigt, so dass über die Rohrkupplung 35 unter Druck stehende Hydraulikflüssigkeit in die Leitung 36 einströmen kann, in der sich, da das Ventil 38 noch gesperrt ist, ein Druck aufbaut, der sich über die Hydraulik-Leitung 46 zum Hydraulik-Zylinder 45 fortpflanzt.Der Druck im Hydraulik-Zylinder 45 verstellt dessen Kolbenstange 47 und damit den Permanentmagneten 51 gemäss Fig. 2 nach links und zwar entgegen dem Druck des Stossdämpfers 48 und der Feder 49. Dabei wird zuerst der elektrische Schalter 52 geschlossen, der ein Signal für die logische Schaltung 57 erzeugt, die ihrerseits beim Eingang dieses Signals über den elektrischen Leider 59 ein Steuersignal abgibt, das den Elektromagneten 37 erregt,welcher das Sperrventil 38 öffnet. Das durch die Schaltung 57 erzeugte Steuersignal hat eine festgelegte Dauer, zweckmässig 3 sec. (=Öffnungszeig). Hydraulikflüssigkeit strömt dann von der Leitung 36 in die Hydraulik-Leitung 39, in der sich ein entsprechender Druck zur Betätigung des Schar-Hubzylinders 23 aufbaut. Der Letztere drückt nun die Schare 12 gegen bzw. in den Boden. Nach einem weiteren Druckanstieg in den Hydraulikleitungen 36, 39 und 46 wird auch die Kolbenstange 47 des Hydraulikzylinders 45 im Signalgeber 44 gemäss Figur 2 weiter nach links verstellt, und zwar so lange, bis derjenige elektrische Schalter, im Ausführungsbeispiel "54", geschlossen wird, der mit dem vorher manuell betätigten Schalter, z.B. "64", korrespondiert. Die logische Schaltung 57 vergleicht nämlich fortlaufend die vom Signalgeber 44 bzw. den einzelnen elektrischenSchaltern 53, 54 und 55 abgegebene Signale mit dem durch den Vorwähl-Schalter 63, 64 oder 65 in die Schaltung 57 eingegebenen Druck- bzw.Vorspannungswert für die Schare 12. Stellt die Schaltung 57 eine Übereinstimmung fest, wird das Öffnungssignal für den Elektromagneten 37 unterbrochen. Diese Unterbrechung wirkt auf eine festgelegte Zeit, zweckmässig 6 Sekunden (=Unterbrecherzeig). Folglich schliesst jetzt das Sperrventil 38. Das Werte-Schema für die Schaltlogik lässt sich in Abhängigkeit der betätigten elektrischenSchalter wie folgt darstellen:

```
52 ----------------------------- Öffnung
52 + 53 + 63 --------------------- Unterbrechung
52 + 54 + 64 --------------------- Unterbrechung
52 + 55 + 65 --------------------- Unterbrechung.
```

Nach dem Druckaufbau für die Schare 12 betätigt der Traktorfahrer wieder das Zusatz-Steuergerät 33 an der Zugmaschine, um im Bedarfsfall einen Rücklauf der Hydraulikflüssigkeit in einen traktorseitigen Vorratsbehälter zu ermöglichen. Der Druck hinter dem Sperrventil 38 bleibt stehen, davor fällt er ab und der Hydraulik-Zylinder 45 fährt zurück, und zwar aufgrund seiner Federbelastung. Dabei wird der elektrische Schalter 52 wieder ausgelöst, was jetzt ohne Wirkung bleibt, weil die Unterbrecherzeit nach dem eben abgeschlossenen Druckaufbau noch andauert. Das entsprechende Signal vom Signalgeber 44 wird blockiert, wenn der hydraulische Druck vom Zusatz-Steuergerät 33 vor dem Sperrventil 38 abgebaut wird, in der Sämaschine hinter dem Sperrventil 38 (Leitung 39) aber stehen bleiben soll. Wie schon oben erwähnt, ist nun der Rücklauf hinter dem Sperrventil 38 über die Hydraulikleitung 36 und das Zusatz-Steuergerät 33 frei bis in den Hydraulikflüssigkeits-Vorratsbehälter der Zugmaschine. Das Sperrventil 38 kann nach in die Schaltung 57 eingehenden elektrischen Signalen durch manuelle Betätigung eines Schalters 6 während des Betriebs sofort durch den Elektromagneten 37 geöffnet werden und Hydraulikflüssigkeit in den Traktor-Vorratsbehälter ablassen, wenn der Schardruck abgebaut werden soll. Der elektrische Schalter 6 bildet folglich einen "Auslöseschalter", der z.B. auch bei Störungen durch Staumassen vor den Scharen betätigt wird.

Mit anderen Worten, die Schaltung 57 ist durch einen manuell betätigbaren Auslöseschalter 6 aktivierbar, um durch Öffnung des Sperrventils 38 jederzeit eine Aufhebung der Vorspannung und Einziehung der Schare 12 zu ermöglichen. Die Rückholfeder 84 hebt bei abgebautem Schardruck die Schare 12 an.

Auf obige Weise wird die Vorspannkraft eingeregelt, mit der sämtliche Schare 12 durch denSchar-Hubzylinder 23 gegen bzw. in den Boden gedrückt werden. Der Stossdämpfer 48 verlägnert die Reaktionszeit, so dass die Schare 12 nach Öffnung des Zusatz-Steuergerätes 33 ausreichend Zeit haben, in den Boden einzudringen, wobei zugleich eine Stabilisierung des Hydraulikdrucks vor dem Schar-Hubzylinder 23 erreicht wird.

Vorstehend ist das über das Zusatz-Steuergerät 33 manuell gesteuerte Aus- und Einfahren der Schare 12 beschrieben. Die Schare werden jedoch beim Anheben der Sämaschine durch die Aushebevorrichtung des Traktors oder beim Rückwärtsfahren der Sämaschine auch selbsttätig eingefahren. Im Ausführungsbeispiel ist an einem Maschinenrahmenteil 17 der elektrische Schalter 32 in Form eines Reed-Schalters befestigt, der durch den Permanentmagneten 31 geschaltet wird, wenn der Vorrahmen 27 beim Anheben der Sämaschine durch den Traktor eine begrenzte Relativbewegung gegenüber dem Maschinen-Hauptrahmen ausführt. In diesem Fall gibt der Schalter 32 ein Signal ab, auf das die logische Schaltung 57 anspricht, die ihrerseits über den elektrischen Leiter 59 ein Steuersignal abgibt, welches den Elektromagenten 37 erregt, der seinerseits das Sperrventil 38 öffnet, so dass der hydraulische Druck am Schar-Hubzylinder 23 abfällt (der Rücklauf der Hydraulikflüssigkeit über die Leitungen 36, 34 ist offen) und die Rückholfeder 84 für die Schare 12 in Funktion treten kann. Letztere zieht, wie schon oben erläutert, die Schare 12 in die Sämaschine zurück. Es wird noch bemerkt, dass beim Absetzen der Sämaschine durch die Aushebevorrichtung des Traktors die entsprechende Relativbewegung des Vorrahmens 27 gegenüber dem Maschinenhauptraum kein Signal durch den elektrischen Schalter 32 auslöst.

Um beim Rückwärtsfahren oder Zurückrollen der Sämaschine eine Verstopfung und/oder Beschädigung der Schare 12 zu vermeiden, wird auch in diesemFall das Sperrventil 38 durch den Elektromagneten 37 geöffnet. Zu diesem Zweck ist, wie schon oben erwähnt, mit einem der Laufräder 14 der Sämaschine das Zahnprofilrad 71 drehfest verbunden, das beim Rückwärtsfahren oder Zurückrollen der Sämaschine den drehrichtungsabhängig arbeitenden, induktiven Schalter 70 betätigt, der über den elektrischen Leiter 69 ein Signal in die logische Schaltung 57 eingibt, die daraufhin das Steuersignal für die Betätigung des Elektromagneten 37 auslöst. So kann auch in diesem Fall die Rückholfeder 84 sämtliche Schare 12 augenblicklich anheben bzw. in die Sämaschine zurückziehen, da durch die Öffnung des Sperrventils 38 der Schar-Hubzylinder 23 druckentlastet ist. (Auch in diesemFall ist der Rücklauf der Hydraulikflüssigkeit über die Leitungen 36, 34 offen).

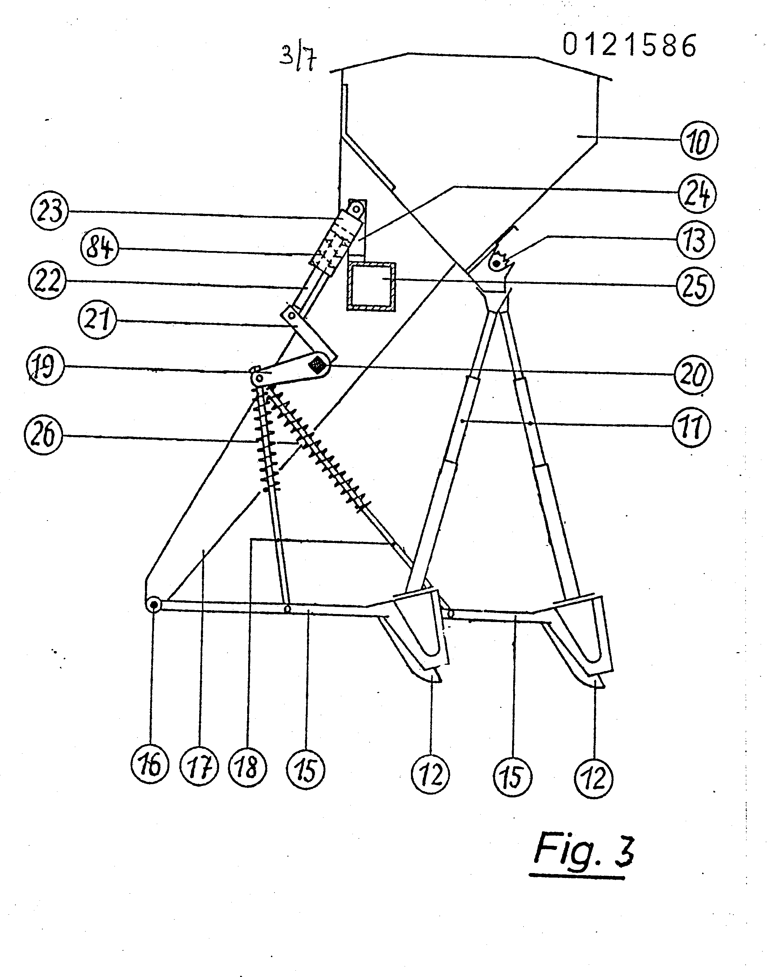

Die in Fig. 3 gezeigte Sä- oder Drillmaschine unterscheidet sich von der zuvor beschriebenen Sämaschine nur dadurch, dass das Laufrad fehlt und auch die gelenkige Verbindung zum Vorrahmen 27 nicht vorhanden ist. Vielmehr wird diese Maschine in an sich bekannter Weise direkt von der Zugmaschine wie andere Bodenbearbeitungsgeräte, z.B. Pflüge u.dgl., befestigt.

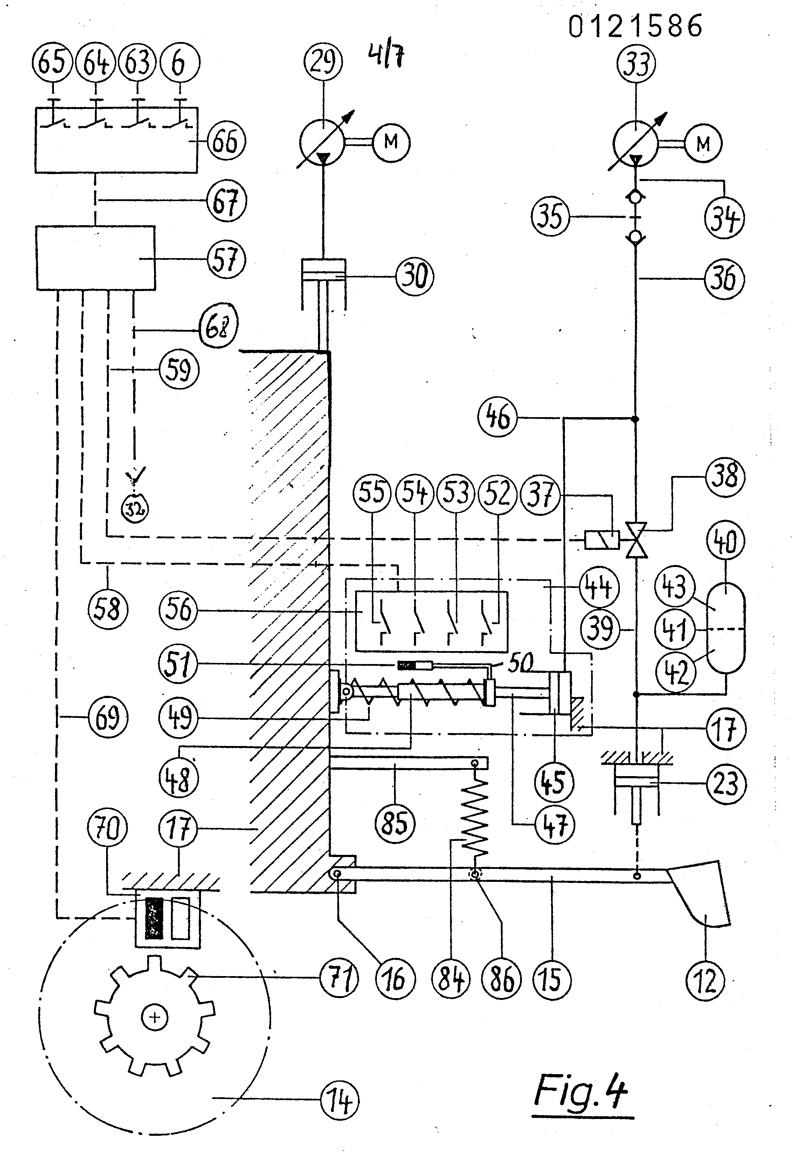

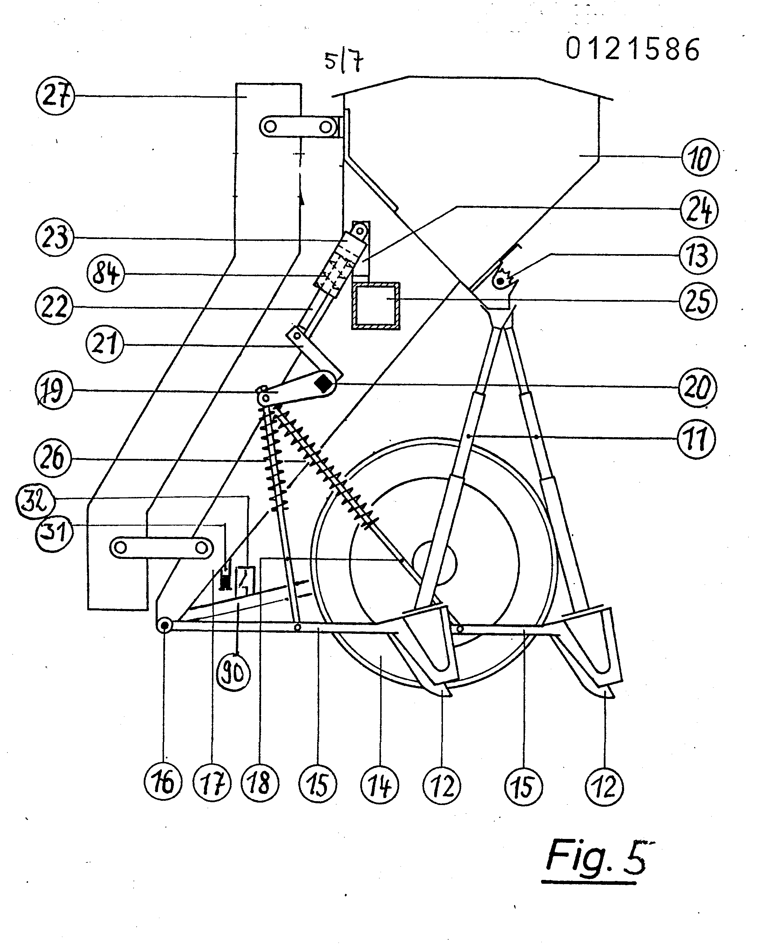

In Fig. 4 ist ein für die erfindungsgemäße Sämaschine abgewandeltes Schaltbild des elektrischen und hydraulischen Teils des Steuersystems dargestellt, wobei die Anordnung des Betätigungselementes 31 und des Schaltelementes 32 aus Fig. 5 hervorgehen, die ebenfalls die erfindungsgemäße Sämaschine zeigt in Verbindung mit einem Nachlaufrad 14', das über einen Verbindungshebel
90 wie gezeigt nachgezogen wird. Das Nachlaufrad 14'
stützt die Sämaschine, wie es aus einem Vergleich von
Fig. 5 mit Fig. 1 klar hervorgeht nicht ab, sondern
dient nur als Geber für den Fühler 70', der nunmehr
zur Erfassung der Drehgeschwindigkeit und der zurückgelegten Fahrstrecke verwendet wird. Wie aus Fig. 5 zu
ersehen ist, ist das Betätigungselement 31 am Grundrahmen 17 befestigt, während das Schaltelement 32 an dem
verschwenkbaren und bei 16 angelenkten Verbindungshebel 90 befestigt ist, so dass der Abstand der Sämaschine
über dem Boden erfasst und der Hubzylinder 30 entsprechend gesteuert werden kann.

Das Laufrad 14' könnte auch noch über eine Kette (nicht
gezeigt) mit einer über eine Dosierwelle angetriebenen
Dosiereinrichtung verbunden sein.

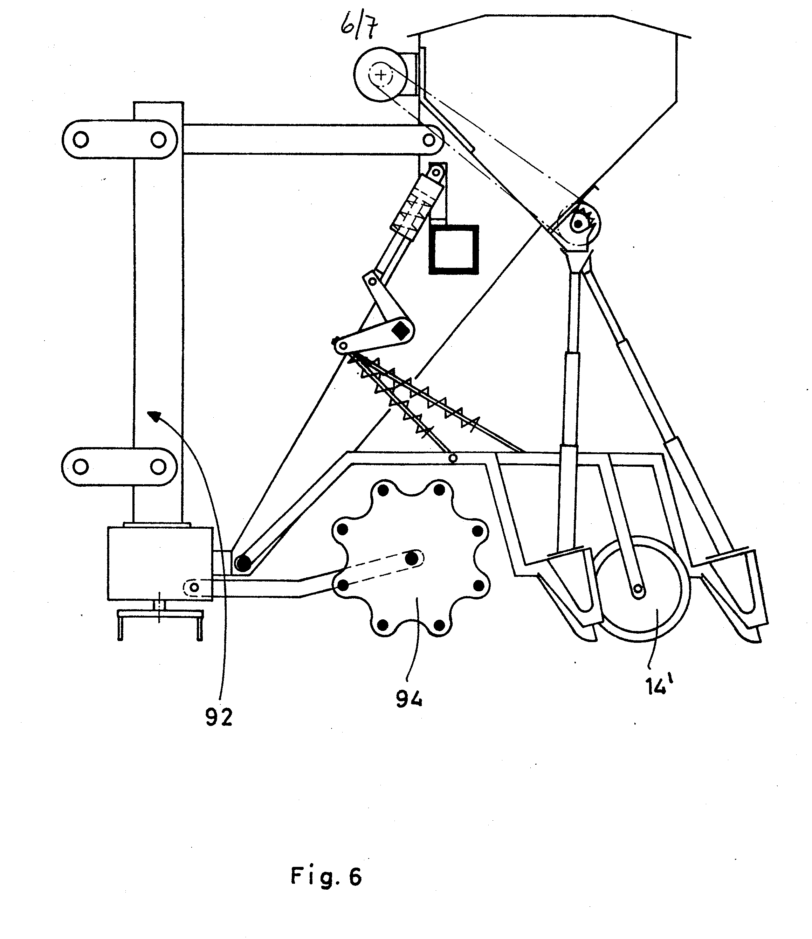

In Fig. 6 ist die erfindungsgemässe Sämaschine in Verbindung mit einem tragenden Bodenbearbeitungsgerät 92
beispielhaft gezeigt. Das mit dem Bezugszeichen 94 versehene Bauteil ist eine Hackerwalze.

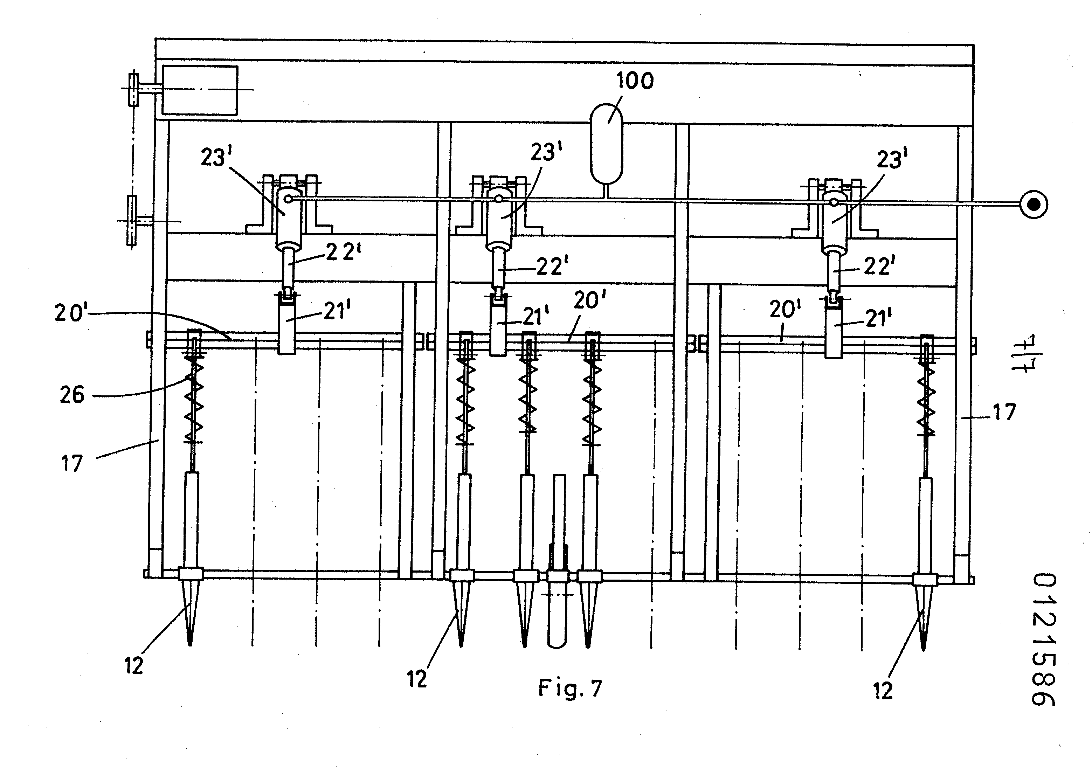

Fig. 7 zeigt eine Draufsicht auf eine erfindungsgemässe
Sämaschine. Sie unterscheidet sich von der Sämaschine
gemäss Fig. 1 dadurch, dass die Säschare 12 quer zur
Fahrtrichtung zu mehreren aufeinanderfolgenden Gruppen
zusammengefasst sind, dass die Welle 20 in voneinander
getrennte Wellenabschnitte 20' unterteilt ist und dass
jedem Wellenabschnitt jeweils ein Hubzylinder 23' zugeordnet ist, so dass jede Gruppe von Säscharen 12 von
einem eigenen Hubzylinder 23' mit konstantem Druck beaufschlagt wird. Wie ferner aus Fig. 7 zu entnehmen,
sind die Hubzylinder miteinander und mit einem Druckspeicher 100 verbunden. Aufgrund dieser Anordnung ist
es möglich, nicht nur Nickbewegungen der Sämaschine in
Fahrtrichtung, sondern auch Nickbewegungen der Sämaschine quer zur Fahrtrichtung auszugleichen, indem

0121586

beispielsweise eine Nickbewegung in Fig. 7 nach rechts unten die linke Gruppe von Säscharen weiter nach unten vom Rahmen entfernt werden kann als die rechte Gruppe von Säscharen.

Im übrigen haben Bauteile mit gleichen Bezugszeichen wie die Bauteile in den Figuren 1 und 2 die gleichen Funktionen, so dass sich ein näheres Eingehen erübrigt.

PATENTANWÄLTE
Dr. rer. nat. DIETER LOUIS
Dipl.-Phys. CLAUS PÖHLAU
Dipl.-Ing. FRANZ LOHRENTZ
Dipl.-Phys. WOLFGANG SEGETH
KESSLERPLATZ 1
8500 NÜRNBERG 20

- 1 -

0121586

Patentansprüche:

1. Sämaschine mit einem an einem Grundrahmen befestigten Saatgutvorratsbehälter und relativ zum Saatgutvorratsbehälter anhebbaren und absenkbaren und im wesentlichen mit konstantem Druck in den Boden greifenden Scharen, wobei der Grundrahmen mit dem Rahmen eines Fahrzeuges verbindbwr ist,
dadurch gekennzeichnet, dass an dem Grundrahemn (17) eine mit dem Boden in Kontakt stehende Abstützung (14) fehlt und dass der Grundrahmen (17) der Sämaschine mit dem Fahrzeugrahmen in auskragender Weise befestigt ist.

2. Sämaschine nach Anspruch 1,
dadurch gekennzeichnet, dass die Befestigung der Sämaschine lösbar ist.

3. Sämaschine nach einem der vorhergehenden Ansprüche,
dadurch gekennzeichnet, dass eine hydraulische Dosiereinrichtung vorgesehen ist.

4. Sämaschine nach einem der Ansprüche 1 bis 3, bei der mindestens eine die Säschare mit konstantem Druck nach unten beaufschlagende Druckeinrichtung vorgesehen ist,
dadurch gekennzeichnet, dass die Säschare (12) quer zur Fahrtrichtung zu mehreren aufeinanderfolgenden Gruppen zusammengefasst sind, die von je eine Druckeinrichtung (23') beaufschlagt werden, wobei alle Druckeinrichtungen den gleichen Druck ausüben.

5. Sämaschine nach Anspruch 4,
dadurch gekennzeichnet, dass die Gruppen von Säscharen (12) durch je einen Wellenabschnitt (20')
verschwenkbar sind, an dem jeweils ein Hubzylinder
(23') zur Verschwenkung des Wellenabschnittes angreift, und dass alle Hubzylinder (23') miteinander und mit einem Druckspeicher (100) verbunden
sind.

Fig. 1

0121586

2/7

*Fig. 2*

3/7

0121586

_Fig. 3_

0121586

4/7

Fig.4

0121586

*Fig. 5*

6/7

92

94

14'

Fig. 6

0121586

7/7

Fig.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,E | DE-C-3 217 428 (KIRCHBERGER) <br> * Spalte 6, Zeilen 3-67; Abbildung 1 * | 1,2,3 | A 01 C 7/08 |
| A | FR-A-2 503 979 (KUHN) <br> * Seite 3, Zeilen 30-36; Seite 4; Seite 5; Abbildungen 1,4 * | 1,2 | |
| A | DE-A-3 105 641 (AMAZONEN-WERKE) <br> * Seite 7; Seite 8; Seite 9; Abbildungen 1,2,3,4 * | 1,2 | |
| A | FR-A-1 595 375 (RAU) <br> * Seite 3, Zeilen 34-41; Seite 4, Zeilen 1-23; Seite 5, Zeilen 18-41; Seite 6, Zeilen 1-10; Abbildungen 1,2,3,4,10,11,12,13 * | 1,2 | RECHERCHIERTE SACHGEBIETE (Int. Cl. 3) |
| A | FR-A-2 120 844 (DEERE) <br> * Seite 11, Zeilen 22-40; Seite 12; Seite 13; Seite 14; Abbildungen 3,4,5,6,7 * | 3,4,5 | A 01 C <br> A 01 B |
| A | GB-A-1 513 238 (MASSEY-FERGUSON) <br> * Seite 2, Zeilen 19-130; Seite 3; Seite 4, Zeilen 1-48; Abbildungen 1,2,3 * | 3,4,5 | |

--- -/-

Der vorliegende Recherchenbericht wurde für alle Patentansprüche erstellt.

| Recherchenort <br> DEN HAAG | Abschlußdatum der Recherche <br> 28-02-1984 | Prüfer <br> VERMANDER R.H. |
|---|---|---|

Europäisches
Patentamt

**EUROPÄISCHER RECHERCHENBERICHT**

0121586

Nummer der Anmeldung

EP 83 10 6153

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 570 605  (RIKLI) <br> * Spalte 3, Zeile 11 - Spalte 4, Zeile 54; Abbildungen 1,2,3,4 * <br><br> ----- | 3,4,5 | |

RECHERCHIERTE
SACHGEBIETE (Int. Cl. ³)

Der vorliegende Recherchenbericht wurde für alle Patentansprüche erstellt.

| Recherchenort <br> DEN HAAG | Abschlußdatum der Recherche <br> 28-02-1984 | Prüfer <br> VERMANDER R.H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82